# EUROPÄISCHE PATENTANMELDUNG

(11) **EP 0 978 856 A2**
(43) Veröffentlichungstag der Anmeldung: **09.02.2000**
(21) Anmeldenummer: 99113504.7
(22) Anmeldetag: 02.07.1999
(51) Int. Cl.: H01H 3/46

(54) **Gelenkige, eine Kraft übertragende Verbindunganordnung**

(30) Priorität: 01.08.1998 DE 19834755
(71) Anmelder: ABB PATENT GmbH, 68309 Mannheim (DE)
(72) Erfinder: Sellner, Rudolf, 68766 Hockenheim (DE); Ziegler, Gerhard, 74931 Lobbach 2 (DE); Kommert, Richard, Dipl.-Ing., 6914 Heidelberg (DE)
(74) Vertreter: Miller, Toivo

(57) **Zusammenfassung**

Es wird eine gelenkige, eine Kraft übertragende Verbindungsanordnung zweier drehbarer Hebel vorgeschlagen, von denen einer U-förmig ist, insbesondere für ein Schaltschloß eines elektrischen Installationsschaltgerätes, bei der der U-förmige erste Hebel (10) im Bereich seines Endes an seinem einen Schenkel (13) eine Aussparung (20) und am anderen Schenkel (14) ein Loch (19) aufweist, und der zweite Hebel aus Flachmaterial gebildet ist und ein T-förmiges Ende aufweist, wobei ein Ende (28) des Quersteges (26) in das Loch (19) gesteckt und das andere Ende (27) in der Aussparung (20) geführt ist

## Beschreibung

Die Erfindung betrifft eine gelenkige, eine Kraft übertragende Verbindungsanordnung gemäß dem Oberbegriff des Anspruches 1.

In Leitungsschutzschaltern, elektrischen Schaltgeräten und anderen Installationseinrichtungen sind Schaltsohlösser vorgesehen, oder ganz allgemein Getriebe, bei der die Dreh- oder Schiebebewegung eines Hebels über eine gelenkige Verbindungsanordnung auf einen anderen Hebel zu übertragen ist.

Bei einer besonderen Ausführung ist der eine Hebel ein Drahtbügel, dessen eines Ende L-förmig abgeknickt ist, so daß es in ein vorbereitetes Loch senkrecht zur Längserstreckung des Bügels eingesteckt werden kann. Ein solcher Bügel ist meist aus steifem Draht hergestellt und besitzt den großen Vorteil, daß die Montage wegen der Bewegung senkrecht zur Längserstreckung sehr einfach ist.

Wenn der eine Hebel aus einer flachen Lasche besteht, ist die Verbindungsanordnung einfach; wenn der eine Hebel U-förmig ist und die U-Schenkel am einen Ende des Hebels zwei Löcher besitzen, in die das abgeknickte Ende des Bügels eingesteckt wird, um eine größere Kraftverteilung und Kraftübertragung zu erzielen, dann besteht das Problem, daß aufgrund von ungünstigen Toleranzen die Kraft von dem Bügel lediglich auf den einen Schenkel übertragen wird, wodurch ein Drehmoment auf den U-förmigen Hebel ausgeübt wird.

Aufgabe der Erfindung ist es, eine Verbindungsanordnung der eingangs genannten Art zu schaffen, bei der bei gleicher Herstellung und gleicher Montage eine optimale Kraftübertragung auf den U-förmigen drehbaren Hebel erreicht wird.

Diese Aufgabe wird erfindungsgemäß gelöst durch die Merkmale des Anspruches 1.

Danach besitzt der U-förmige Hebel im Bereich seines Endes an seinem einen Schenkel eine Aussparung und am anderen Schenkel ein Loch; der andere Hebel ist aus Flachmaterial hergestellt und besitzt eine T-Form, wobei ein Ende des Querstegs der T-Form in das Loch eingesteckt und das andere Ende in der Aussparung geführt ist.

Die Aussparung ist dabei kreisbogenförmig, wobei der Durchmesser der Kreisbogenform dem Durchmesser des Loches entspricht.

Dadurch werden bei der Kraftübertragung von dem einen Hebel auf den anderen die beiden Enden des Querstegs gegen den Innenrand der Aussparung bzw. des Loches gedrückt, so daß beide Schenkel der U-Form des Hebels belastet werden.

Die Montage des Hebels aus Flachmaterial erfolgt in der gleichen Weise wie die Montage eines Bügels aus Draht: In besonderer Weise ausgerichtet wird der eine Schenkel durch die Aussparung hindurch in das Loch eingesetzt; dann ist die Montage beendet, wobei das andere Ende des Quersteges in der Aussparung geführt ist.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt, wird die Erfindung näher beschrieben.

Es zeigen:
- Fig. 1: eine perspektivische Ansicht der Verbindungsanordnung der beiden Hebel, und
- Fig. 2: eine Aufsicht auf den Endabschnitt des ersten Hebels gemäß Pfeilrichtung II.

Die Verbindungsanordnung umfaßt einen ersten Hebel 10 und einen damit gelenkig verbundenen zweiten Hebel 11. Der erste Hebel 10 ist U-förmig und besitzt einen Steg 12, an dem beidseitig Schenkel 13 und 14 angeformt sind. An den in der Zeichnung rechts befindlichen Ende des ersten Hebels 10 sind die Schenkel 13, 14 entfernt, so daß lediglich der Steg 12 vorhanden ist. Am Ende dieses Steges 12 sind senkrecht dazu Vorsprünge 15 und 16 vorgesehen, mit denen der erste Hebel 10 mit einem Teil eines Schaltschlosses (nicht dargestellt) verbunden ist.

Am anderen Ende des Hebels 10 überragen die Schenkel 13, 14 den Steg 12, so daß abgerundete Schenkelohren 17 und 18 gebildet sind, die in Verlängerung der Schenkel 13 und 14 liegen. Der Schenkel 14 besitzt im Bereich seines Schenkelohres ein Loch 19, wogegen der Schenkel 13 im Bereich seines Schenkelrohres 17 eine Aussparung 20 aufweist, die von der Schenkelkante 13 ausgeht und einen Kreisbogenabschnitt 21 besitzt, der mit dem entsprechenden Abschnitt des Loches 19 fluchtet. Die dem Ende des Schenkelohrs 17 abgewandte Kante des kreisbogenförmigen Abschnittes 21 verlängert sich zur Endkante des Schenkels 13 und bildet dort einen geradlinigen Abschnitt 22, der mit der Endkante einen Winkel bildet, der größer ist als 90°.

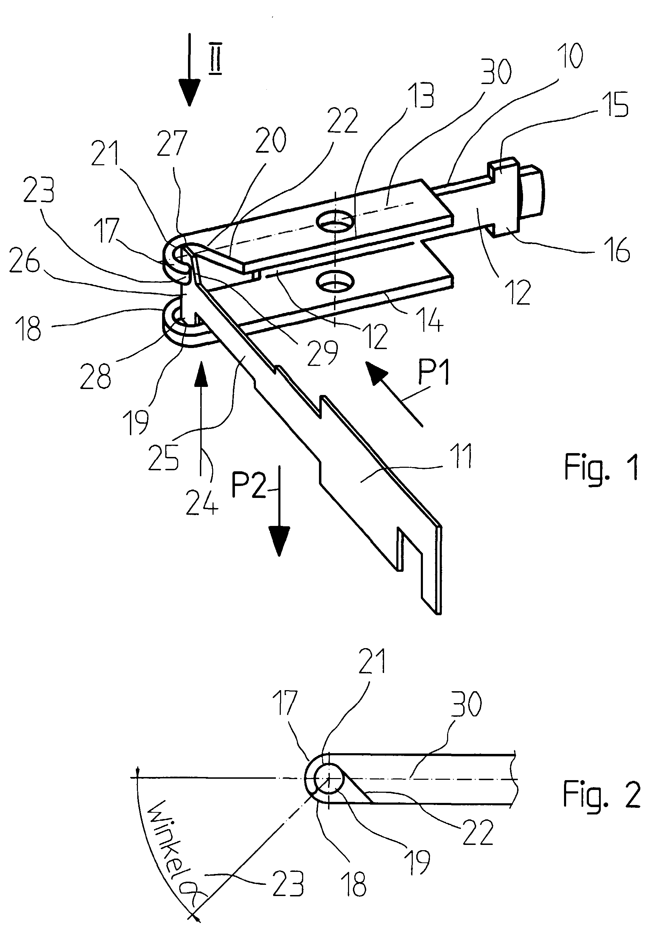

Durch die Aussparung 20 wird im Schenkelohr 17 ein Haken 23 gebildet, dessen Ende die durch den Mittelpunkt des kreisbogenabschnitts 21 und parallel zur freien Kante des Schenksl 13 bzw. 14 verlaufende Linie 30 überragt und mit der Linie 30 einen Winkel α kleiner 90° bildet (siehe Fig. 2).

Der zweite Hebel 11 ist aus Flachmaterial gebildet und besitzt an seinem in der Zeichnung links befindlichen Ende, auf das die Bezugsziffer 24 hindeutet, einen Bereich 25 geringer Breite, dessen freies Ende eine T-Form mit einem Quersteg 26 und zwei Enden des Quersteges 21 und 28 aufweist.

Das eine Ende 28 greift dabei in das Loch 19 im Schenkel 14 ein, wogegen der andere Quersteg bzw. das andere Ende 27 in die Aussparung 20 eingreift.

In der Figur ist die Montagestellung dargestellt, in der die beiden Hebel 10 und 11 einen Winkel zwischen sich einnehmen, der kleiner als 90° ist. In dieser Stellung wird der zweite Hebel 11 in seiner Längsrichtung in die Aussparung 20 hineingeschoben, wobei das Ende 28 noch von der Innenfläche des Schenkels 14 entfernt ist. Diese Verschieberichtung ist mit dem Pfeil P₁ bezeichnet. Wenn der Quersteg 26 mit dem Loch 19 fluchtet, dann wird der zweite Hebel 11 senkrecht zu seiner Längserstreckung und senkrecht zur Verschieberichtung P₁ gemäß Pfeilrichtung P₂ nach unten verschoben, d.h. in Richtung auf die durch die Innenfläche des Schenkels 14 gebildete Ebene, so daß das Ende 28 in das Loch 19 eingreift. Für die endgültige Montage der Anordnung innerhalb eines Schalters werden die beiden Hebel 10 und 11 gestreckt, d.h. sie werden in eine Lage gebracht, in der sie etwa miteinander fluchten. In dieser Anordnung umgreift die Nase 23 die zum Hebel hinweisende Kante 29 des Endes 27, wodurch auch der zweite Hebel 11 im ersten Hebel 10 festgehalten ist.

Bei der Anordnung gemäß der Figur 1 ist die Montage genauso einfach wie die Montage eines Bügels; es erfolgt jedoch die Kraftübertragung von dem ersten Hebel auf den zweiten oder umgekehrt durch die beiden Enden 27 und 28 des Quersteges 26, wodurch eine gleichmäßige Belastung der beiden Schenkel 13 und 14 erzielt wird, ohne daß ein Drehmoment auf den ersten Hebel 20 ausgeübt wird.

## Patentansprüche

1. Gelenkige, eine Kraft übertragende Verbindungsanordnung zweier drehbarer Hebel, von denen einer U-förmig ist, insbesondere für ein Schaltschloß eines elektrischen lnstallationsschaltgerätes, dadurch gekennzeichnet, daß der U-förmige erste Hebel (10) im Bereich seines Endes an seinem einen Schenkel (13) eine Aussparung (20) und am anderen Schenkel (14) ein Loch (19) aufweist, und daß der zweite Hebel aus Flachmaterial gebildet ist und ein T-förmiges Ende aufweist, wobei ein Ende (28) des Quersteges (26) in das Loch (19) gesteckt und das andere Ende (27) in der Aussparung (20) geführt ist.

2. Verbindungsanordnung nach Anspruch 1, dadurch gekennzeichnet, daß die Aussparung (20) einen kreisbogenförmigen Abschnitt (21) aufweist, dessen Innendurchmesser dem Lochdurchmesser entspricht.

3. Verbindungsanordnung nach Anspruch 2, dadurch gekennzeichnet, daß durch die Aussparung (20) eine Nase (23) gebildet ist, die im montierten Zustand das in der Aussparung (20) befindliche Ende (27) des Quersteges (26) wenigstens teilweise umfaßt.

4. Verbindungsanordnung nach Anspruch 3, dadurch gekennzeichnet, daß die Nase am freien Ende des Schenkels (13) angeordnet ist.

5. Verbindungsanordnung nach Anspruch 4, dadurch gekennzeichnet, daß der zur Kante des Schenkels (13) führende Abschnitt (22) der Aussparung (20) einen stumpfen Winkel mit der Kante einnimmt.

6. Verbindungsanordnung nach einem der vorherigen Ansprüche, dadurch gekennzeichnet, daß bezogen auf die durch den Mittelpunkt des kreisbogenförmigen Abschnittes (21) der Aussparung (20) in Längsrichtung des ersten Hebels (10) verlaufende Linie von der Nase (23) überragt wird, so daß zwischen der Linie und dem freien Ende der Nase (23) ein spitzer Winkel eingeschlossen ist.
